# FASCICULE DE BREVET EUROPEEN

(11) **EP 1 719 439 B1**
(45) Date de publication et mention de la délivrance du brevet: **01.07.2009**
(21) Numéro de dépôt: 06356038.7
(22) Date de dépôt: 31.03.2006
(51) Int. Cl.: A47J 31/00

(54) **Machine à café à plusieurs têtes d'infusion**
Kaffeemaschine mit mehreren Brühköpfen
Coffee machine with several brewing heads

(30) Priorité: 04.05.2005 FR 0504570
(43) Date de publication de la demande: 08.11.2006
(73) Titulaire: SEB SA, 69134 Ecully (FR)
(72) Inventeur: Bienvenu, Denis, 53370 Saint Pierre des Nids (FR); Hiron, Frédéric, 72130 Saint Ouen de Mimbre (FR)
(74) Mandataire: Kiehl, Hubert

(56) Documents cités:
- EP-A- 0 577 561
- US-A- 5 259 297
- US-A- 5 813 318

## Description

La présente invention est relative à une machine a café apte à préparer une boisson chaude à partir d'un produit de percolation ou d'infusion en vrac ou contenu dans une dosette préfabriquée, tel le café moulu, le thé, le chocolat ou une poudre soluble de café, lait ou chocolat. L'invention concerne plus particulièrement une telle machine comportant plusieurs têtes d'infusion ou de percolation fonctionnant simultanément ou séparément.

Un appareil, de préparation et distribution de boissons chaudes comprend généralement un réservoir d'eau froide, une pompe électrique, un ensemble formant chaudière et une tête d'infusion qui reçoit un porte-filtre contenant le café moulu ou directement des dosettes préfabriquées où la tête d'infusion envoie l'eau chaude en provenance de la chaudière, la boisson obtenue étant ensuite orientée vers un récipient collecteur.

On connaît dans l'état de la technique, notamment du document US 5 259 297, une machine à café professionnelle apte à préparer des boissons de type espresso, cappuccino ou thé en envoyant de l'eau chaude ou de la vapeur vers plusieurs têtes d'infusion. La machine comprend notamment une chaudière alimentée en eau par une pompe à travers un conduit d'alimentation pour produire de l'eau chaude ou de la vapeur via des buses prévues à cet effet. La machine comprend également plusieurs dispositifs de percolation dont les circuits hydrauliques sont disposés en parallèle sur la ligne d'alimentation en eau froide de la machine. Chaque dispositif de percolation comprend sa propre pompe, son débitmètre, un élément chauffant instantané et une électrovanne. Les têtes de percolation sont reliées électriquement à une unité de contrôle commune. Du fait qu'elle dispose de ses propres moyens de distribution de la quantité d'eau en provenance d'un conduit commun d'alimentation en eau, une telle machine est apte à fournir une boisson bien dosée pour chaque tête de percolation, mais au prix d'une complexité constructive, d'un encombrement et d'un coût de fabrication importants.

Le but de l'invention est de remédier à ces inconvénients et de proposer une machine à café à plusieurs têtes d'infusions, apte à assurer une distribution précise de la quantité d'eau pour chaque tête d'infusion, pour un coût de fabrication moindre et ceci notamment pour une machine à café fonctionnant à faible pression.

Un autre but de l'invention est une machine à café à plusieurs têtes d'infusion comportant des moyens de contrôle aptes à bien maîtriser la quantité globale d'eau distribuée, ainsi que la répartition d'eau d'infusion dans chaque tête d'infusion, afin d'obtenir le volume requis de boisson dans une tasse, et ceci de manière simple et fiable dans le temps.

Ces buts sont atteints avec une machine à café comportant plusieurs têtes d'infusion pouvant recevoir chacune une quantité prédéterminée de produit à infuser, et un circuit hydraulique commun comportant un réservoir d'eau relié par un débitmètre à une pompe qui envoie l'eau du réservoir dans une chaudière ayant un conduit de sortie, le débitmètre et la pompe étant connectés à des moyens électroniques de contrôle du fonctionnement de la machine, du fait que le conduit de sortie de la chaudière est divisé en plusieurs conduits parallèles prévus pour amener l'eau aux têtes d'infusion, chaque conduit étant relié à des moyens de distribution d'eau commandés par lesdits moyens de contrôle en fonction du signal reçu dudit débitmètre.

Une telle machine à café comporte donc, de préférence à l'intérieur d'un boîtier, un circuit hydraulique commun qui amène l'eau froide du réservoir à la chaudière de la machine. Lorsque la chaudière a atteint la température de fonctionnement, la pompe est mise en marche et envoie une certaine quantité d'eau nécessaire au fonctionnement de la machine, laquelle quantité d'eau est mesurée par le débitmètre. L'eau traverse la chaudière et ressort par plusieurs conduits parallèles en direction des têtes d'infusion. Les moyens de distribution d'eau de l'invention, disposés entre le conduit commun de sortie de la chaudière et l'entrée dans chaque tête d'infusion, sont alors commandés par les moyens de contrôle pour qu'ils laissent passer une quantité prédéterminée d'eau à travers chaque tête d'infusion. La quantité d'eau qui passe à travers les moyens de distribution dans chaque tête d'infusion est mesurée par le même débitmètre, les moyens de distribution fonctionnant alors pour envoyer l'eau de manière alternative dans chaque tête d'infusion ; la quantité totale d'eau en provenance du circuit hydraulique commun est ainsi bien répartie entre toutes les têtes de la machine. Lorsque l'information issue du débitmètre atteste que la quantité d'eau globale a été véhiculée par la pompe, les moyens de contrôle électronique de la machine arrêtent la pompe.

Ainsi, avec un circuit hydraulique commun, mais en utilisant des moyens de distribution commandés séparément pour chaque tête d'infusion, on peut correctement répartir la quantité d'eau globale envoyée par la pompe entre les différentes têtes d'infusion et, par la suite, obtenir une quantité de boisson bien dosée dans chaque tasse de manière simple, fiable et peu coûteuse. Ceci est d'autant plus important dans le cadre d'une machine à café fonctionnant à basse pression qui est plus sensible aux pertes de charge créées lorsque la machine envoie de l'eau à une pression d'environ 2 bars à travers le produit à infuser présent dans la tête d'infusion.

Une machine à café selon l'invention se prête aussi bien à la fabrication d'un seul café, lorsqu'une seule tête d'infusion est activée, ou à celle de plusieurs cafés, lorsque plusieurs ou toutes les têtes d'infusion sont activées simultanément par l'utilisateur.

De préférence, la machine à café selon l'invention comporte deux têtes d'infusion.

Ceci permet de confectionner soit deux boissons identiques simultanément, par exemple deux tasses de café au cas où deux produits d'infusion, par exemple contenus dans des dosettes identiques, sont installés dans les deux têtes d'infusion, soit une boisson combinée en utilisant deux dosettes différentes, par exemple une dosette de lait et une dosette de café pour obtenir du café au lait.

Avantageusement, lesdits moyens de distribution comportent au moins une électrovanne.

Les électrovannes permettent de réaliser, à partir d'une commande électronique simple, une bonne répartition d'eau dans les canaux, pour un coût de revient moindre.

De préférence, chaque tête d'infusion est reliée à la sortie de la chaudière par une électrovanne à deux voies.

On aurait pu, dans une variante, choisir une électrovanne à trois voies agencée sur le conduit de sortie de la chaudière, l'électrovanne pouvant alors être du type à deux bobines ou à une bobine et un ressort de rappel. On préfère toutefois une solution comportant deux électrovannes à deux voies chacune, car ainsi on peut commander avec précision une seule tête d'infusion à la fois, tout en assurant un remplissage simultané et continu de deux tasses côte à côte.

Avantageusement, ladite électrovanne est à action directe et elle est fermée au repos.

On préfère une telle électrovanne pour des considérations de coût, car elle est moins consommatrice d'énergie.

Avantageusement, lesdits moyens de contrôle commandent le fonctionnement des deux électrovannes selon des cycles de fermeture et d'ouverture alternatifs, avec un intervalle de temps de blocage des deux électrovannes simultanément.

En fonctionnant de manière alternative, l'électronique de commande peut alors commander le fonctionnement d'une électrovanne à la fois. On s'est en effet aperçu, lors des essais effectués, qu'il faut prévoir des intervalles de temps d'arrêt pour les deux électrovannes afin de permettre une lecture de débit correcte par le débitmètre lors du fonctionnement alternatif des deux électrovannes. Ainsi, à titre d'exemple, on prévoit un temps de fermeture de 0.1s pour les deux électrovannes simultanément, le temps d'ouverture d'une électrovanne étant de 0.5s afin de permettre une lecture correcte par le débitmètre.

De préférence, la machine à café comporte des moyens de production de vapeur envoyée dans au moins l'une des têtes d'infusion.

Les moyens de production de vapeur peuvent être utilisés pour réaliser une extraction de produit d'infusion ou de dosette le contenant à la vapeur, ou encore pour réaliser un nettoyage de chaque tête d'infusion à la fin d'un cycle de préparation de boisson.

Avantageusement, la machine à café de l'invention comporte une pompe fonctionnant à basse pression pour envoyer de l'eau à travers des dosettes souples disposées dans les têtes d'infusion.

La solution apportée par l'invention trouve son application surtout dans le cadre d'une machine à café à basse pression (comportant une pompe qui produit une pression de l'ordre de 2 bars) qui utilise des dosettes souples, car les pertes de charge varient beaucoup d'une dosette à l'autre en fonction de leurs tolérances de fabrication, cette variation étant très sensible au fonctionnement en régime de basse pression de la pompe. Il est alors nécessaire de s'assurer que la quantité d'eau distribuée dans chaque tête d'infusion est correcte, peu importe la perte de charge que l'eau d'infusion doit subir après son passage à travers la dosette comprenant le produit d'infusion.

L'invention sera mieux comprise à l'étude des modes de réalisation pris à titre nullement limitatif et illustrés dans les figures annexées dans lesquelles :
- la figure 1 est une vue en perspective d'une machine à café de l'invention;
- la figure 2 montre schématiquement une machine à café selon l'invention.

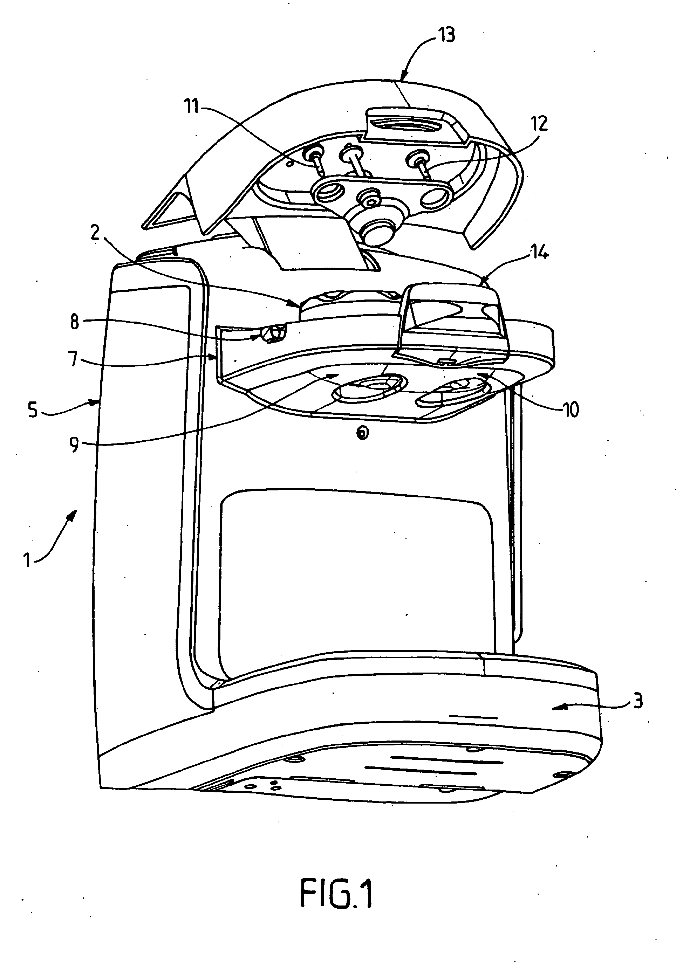

La figure 1 illustre une machine à café selon l'invention comprenant un boîtier 1 comportant une base 3 horizontale inférieure complétée d'un montant vertical arrière 5. Un plateau horizontal 7 est fixé à partir du montant arrière 5 à une hauteur permettant le positionnement sous-jacent d'un récipient, tel que tasse, gobelet ou verseuse. La face supérieure de l'extrémité frontale du plateau 7 présente un logement creux dans lequel est installé un support 8 amovible pour deux dosettes 2, dont une seule est visible sur la figure 1, agencées côte à côte. Le support 8 forme deux empreintes ou têtes d'infusion 9 et 10 verticales traversantes de réception et de maintien des dosettes 2 de produit à infuser.

L'extrémité antérieure du plateau 7 est complétée par deux montants latéraux supportant en rotation une mâchoire 13 qui porte les tuyaux 11,12 d'amenée d'eau chaude d'infusion. Les tuyaux 11,12 peuvent se terminer par une douchette de diffusion de l'eau chaude d'infusion à travers une dosette souple, l'infusion ayant lieu de manière étanche dans chacune des têtes d'infusion ; à titre de variante, chaque tuyau peut être relié à une aiguille munie d'un orifice d'infusion et destinée alors à perforer une dosette dont l'enveloppe est réalisée en un matériau rigide. La boisson obtenue s'écoule ensuite par une tubulure de sortie située en partie inférieure de la tête d'infusion. La mâchoire 13 est maintenue fermée en position abaissée par un dispositif de verrouillage 14.

Une dosette 2 est un sachet souple, légèrement bombé, formé de deux feuilles de papier filtre jointes entre elles au niveau d'une collerette périphérique d'étanchéité. Le sachet contient le produit à infuser se présentant sous forme d'une mouture de café, de thé, de plantes aromatiques, ou sous forme d'une poudre de café, lait, chocolat ou un mélange de ces produits. Dans une variante de l'invention, la dosette comporte une enveloppe rigide en plastique ou en aluminium associée à un filtre ou une grille. Dans encore une autre variante, le produit à infuser en vrac peut être introduit directement à l'intérieur de la coupelle formant tête d'infusion munie dans ce cas d'une paroi filtrante en sa partie inférieure, avant l'orifice d'évacuation de la boisson vers la tasse.

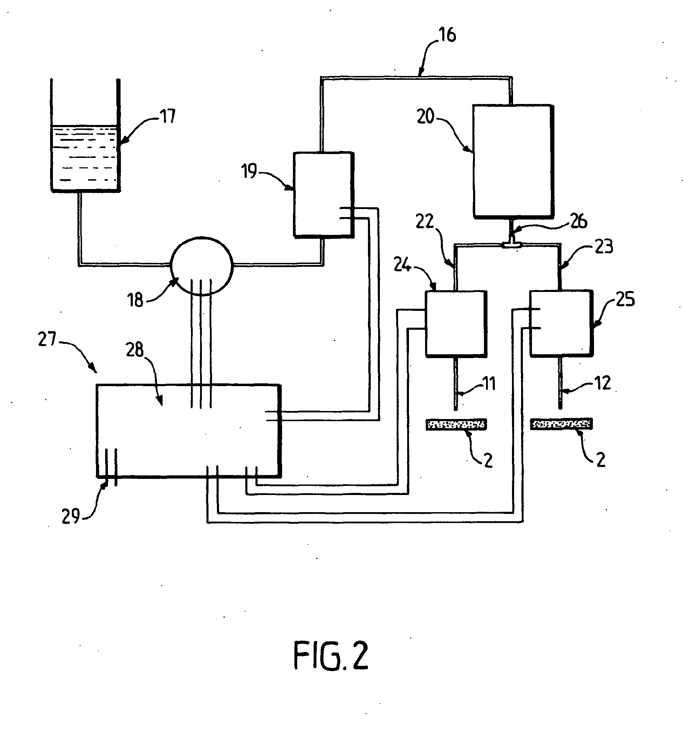

Le boîtier 1 de la machine renferme un circuit hydraulique comportant, tel que mieux visible à la figure 2, un réservoir d'eau froide 17, un débitmètre 18, une pompe 19 et une chaudière 20 montés en série sur un conduit commun 16. Le réservoir d'eau 17 est monté amovible par rapport au boîtier et comporte dans ce but un clapet de fermeture en sa partie de connexion au conduit du boîtier. Le débitmètre 18 comporte une turbine qui mesure le débit d'eau la traversant lorsque l'eau est aspirée par la pompe 19. Le conduit commun 16 de sortie de la pompe 19 est raccordé à l'entrée d'une chaudière 20 ou thermobloc comportant, par exemple, des canaux de circulation d'eau en contact thermique avec un élément chauffant électrique (non représenté sur les dessins).

La machine à café comporte également des moyens électroniques de contrôle 27, notamment une carte électronique 28 comportant une source d'alimentation 29. Les moyens électroniques de contrôle 27 commandent le fonctionnement de la machine en fonction de signaux reçus du débitmètre 18, d'une sonde de température associée à la chaudière ainsi que d'un panneau de commande (non représenté sur les dessins).

Selon l'invention, le conduit de sortie 26 de la chaudière 20 se divise en deux conduits parallèles 22,23 sur chacun desquels est installée une électrovanne 24,25 à deux voies. Les deux électrovannes 24,25 sont reliées à la carte électronique 28 et pilotées par cette dernière, tel qu'il sera expliqué par la suite. L'eau chaude sous pression distribuée par les électrovannes 24,25 arrive dans les tuyaux d'amenée 11,12, puis dans les têtes d'infusion 9,10 à travers les dosettes 2.

En fonctionnement, l'utilisateur commence par introduire une dosette 2 dans l'une des têtes ou dans les deux têtes d'infusion 9,10, puis ferme la mâchoire 13 de la machine et actionne un bouton poussoir de mise en marche pour alimenter en énergie l'élément chauffant électrique de la chaudière 20. Lorsque la température de consigne de l'élément chauffant de la chaudière a été atteinte, un témoin lumineux l'indique à l'utilisateur qui peut alors mettre en marche la pompe 19. A ce moment, la carte électronique 28 commande l'ouverture de l'une ou l'autre, voire des deux électrovannes 24,25 en fonction du mode de fonctionnement choisi par l'utilisateur : une seule tête d'infusion active ou les deux en même temps.

Dans un premier mode de fonctionnement où uniquement l'une des têtes d'infusion, par exemple la tête 9, contient une dosette 2 et où uniquement cette tête d'infusion est rendue active par l'utilisateur, l'action sur un bouton poussoir de commande de l'infusion entraîne, via la carte électronique 28, l'ouverture de l'électrovanne 24 et la mise en marche de la pompe 19. Le débitmètre 18 mesure le débit absorbé par la pompe 19 et envoie un certain nombre d'impulsions à la carte électronique 28. Le débitmètre 18 lit également le débit d'eau envoyé par l'électrovanne 24. Lorsque le nombre d'impulsions correspondant à la quantité de boisson choisie est atteint, la pompe est arrêtée automatiquement par la carte électronique 28.

Dans un deuxième mode de fonctionnement où l'utilisateur introduit une dosette 2 à l'intérieur de chaque tête d'infusion 9,10 afin d'obtenir deux boissons dans des tasses en dessous, l'action sur le bouton de commande de l'infusion entraîne, via la carte électronique 28, l'ouverture des deux électrovannes 24,25 et la mise en marche de la pompe 19. Les électrovannes 24,25 fonctionnent de manière alternative et ainsi le débitmètre peut mesurer le débit qui passe par l'une des électrovannes, alors que la deuxième est fermée. Pour avoir une mesure de débit exacte pour chaque tête d'infusion, le temps d'ouverture d'une électrovanne est de 0.5s pendant lequel le débitmètre 18 peut mesurer correctement le débit d'eau distribué par chaque électrovanne. Un temps de blocage de deux électrovannes d'environ 0.1s est ensuite nécessaire pour que l'électronique ait le temps de réagir et qu'elle puisse piloter une électrovanne à la fois. Le débitmètre 18 mesure en permanence le débit de chaque voie ou tuyau d'amenée 11, 12 et envoie à la carte électronique 28 des impulsions. Lorsque la quantité globale d'eau distribuée par les électrovannes 24 et 25 et mesurée par le débitmètre 18 est égale à la quantité d'eau choisie par l'utilisateur pour chaque tête (la quantité d'eau choisie par l'utilisateur pouvant être différente d'une tête à l'autre), la carte électronique 28 commande l'arrêt de la pompe 19.

La machine de l'invention peut également produire de la vapeur, par exemple, en diminuant le débit d'eau envoyé dans la chaudière, cette eau se vaporisant alors entièrement. Le flux de vapeur sortant par le conduit de sortie 26 de la chaudière 20 est distribué ensuite dans l'une ou l'autre des têtes d'infusion 9, 10 de la même manière que précédemment décrit par les électrovannes 24,25 pilotées par la carte électronique 28. Ces électrovannes contrôlent alors le moment précis d'arrêt de la diffusion de vapeur dans chacune des têtes d'infusion 9,10.

Le flux de vapeur produit par la machine peut ainsi être utilisé pour réaliser un nettoyage des canalisations de café, pour réaliser une extraction d'un produit à infuser, ou pour réaliser un cappuccino via une buse vapeur installée dans l'une des têtes d'infusion.

Ainsi, les moyens de distribution de l'invention permettent de bien doser la quantité de boisson dans une tasse, de contrôler avec précision le bon partage de la boisson dans chaque tasse, sans être influencé par les déséquilibres dus aux pertes de charge dans chaque tête d'infusion, et également de commander le moment précis d'arrêt de la diffusion de vapeur lorsqu'une fonction vapeur a été choisie par l'utilisateur.

D'autres variantes et modes de réalisation de l'invention peuvent être envisagés sans sortir du cadre de ses revendications.

Ainsi, on pourrait remplacer les deux électrovannes à deux voies par une seule électrovanne à trois voies à deux bobines ou à une bobine et un ressort de rappel.

## Revendications

1. Machine à café comportant plusieurs têtes d'infusion (9;10) pouvant recevoir chacune une quantité prédéterminée de produit à infuser, et un circuit hydraulique commun comportant un réservoir d'eau (17) relié par un débitmètre (18) à une pompe (19) qui envoie l'eau du réservoir dans une chaudière (20) ayant un conduit de sortie (26), le débitmètre (18) et la pompe (19) étant connectés à des moyens électroniques de contrôle (27) du fonctionnement de la machine, **caractérisée en ce que** le conduit de sortie (26) de la chaudière (20) est divisé en plusieurs conduits (22;23) parallèles prévus pour amener l'eau aux têtes d'infusion, chaque conduit (22;23) étant relié à des moyens de distribution d'eau commandés par lesdits moyens de contrôle (27) en fonction du signal reçu dudit débitmètre (18).

2. Machine à café selon la revendication 1, **caractérisée en ce qu'**elle comporte deux têtes d'infusion (9;10).

3. Machine à café selon la revendication 2, **caractérisée en ce que** lesdits moyens de distribution comportent au moins une électrovanne (24;25).

4. Machine à café selon la revendication 3, **caractérisée en ce que** chaque tête d'infusion (9;10) est reliée à la sortie de la chaudière par une électrovanne (24;25) à deux voies.

5. Machine à café selon la revendication 4, **caractérisée en ce que** ladite électrovanne (24;25) est à action directe et qu'elle est fermée au repos.

6. Machine à café selon l'une des revendications 4 ou 5, **caractérisée en ce que** lesdits moyens de contrôle (27) commandent le fonctionnement des deux électrovannes (24;25) selon des cycles de fermeture et d'ouverture alternatifs, avec un intervalle de temps de blocage des deux électrovannes simultanément.

7. Machine à café selon l'une des revendications précédentes, **caractérisée en ce qu'**elle comporte des moyens de production de vapeur envoyée dans au moins l'une des têtes d'infusion (9;10).

8. Machine à café selon l'une des revendications précédentes, **caractérisée en ce qu'**elle comporte une pompe (19) fonctionnant à basse pression pour envoyer de l'eau à travers des dosettes souples disposées dans les têtes d'infusion (9;10).

## Claims

1. A coffee machine having a plurality of brewing heads (9; 10), each of which can receive a predetermined quantity of substance to be brewed, and a common water circuit having a water reservoir (17) connected via a flow meter (18) to a pump (19) that delivers the water from the reservoir to a boiler (20) having an outlet duct (26), the flow meter (18) and the pump (19) being connected to electronic control means (27) for controlling operation of the machine, said coffee machine being **characterized in that** the outlet duct (26) from the boiler (20) is subdivided into a plurality of parallel ducts (22; 23) designed to bring water to the brewing heads, each duct (22; 23) being connected to water dispenser means controlled by said control means (27) as a function of the signal received from said flow meter (18).

2. A coffee machine according to claim 1, **characterized in that** it has two brewing heads (9; 10).

3. A coffee machine according to claim 2, **characterized in that** said dispenser means include at least one solenoid valve (24; 25).

4. A coffee machine according to claim 3, **characterized in that** each brewing head (9; 10) is connected to the outlet of the boiler via a two-port solenoid valve (24; 25).

5. A coffee machine according to claim 4, **characterized in that** said solenoid valve (24; 25) is direct-acting, and **in that** it is closed at rest.

6. A coffee machine according to claim 4 or claim 5, **characterized in that** said control means (27) control operation of the two solenoid valves (24; 25) using alternating closure and opening cycles, with a time interval in which both of the solenoid valves are blocked simultaneously.

7. A coffee machine according to any preceding claim, **characterized in that** it has steam generator means for generating steam that is delivered to at least one of the brewing heads (9; 10).

8. A coffee machine according to any preceding claim, **characterized in that** it has a pump (19) operating at low pressure for delivering water through flexible pods disposed in the brewing heads (9; 10).

## Patentansprüche

1. Kaffeemaschine mit mehreren Brühköpfen (9; 10), die jeweils eine vorbestimmte Menge eines aufzubrühenden Produkts aufnehmen können, und mit einem gemeinsamen hydraulischen Kreis, der einen Wasserbehälter (17) aufweist, der über einen Durchflussmesser (18) mit einer Pumpe (19) verbunden ist, die das Wasser vom Behälter in einen Heizkessel (20) fördert, der eine Ausgangsleitung (26) besitzt, wobei der Durchflussmesser (18) und die Pumpe (19) mit elektronischen Mitteln (27) zum Kontrollieren des Betriebs der Maschine angeschlossen sind, **dadurch gekennzeichnet, dass** die Ausgangsleitung (26) des Heizkessels (20) in mehrere parallele Leitungen (22; 23) aufgeteilt ist, die dazu vorgesehen sind, das Wasser zu den Brühköpfen zu leiten, wobei jede Leitung (22; 23) mit Wasserverteilungsmitteln verbunden ist, welche durch die Kontrollmittel (27) in Abhängigkeit von dem aus dem Durchflussmesser (18) erhaltenen Signal gesteuert sind.

2. Kaffeemaschine nach Anspruch 1, **dadurch gekennzeichnet, dass** sie zwei Brühköpfe (9; 10) aufweist.

3. Kaffeemaschine nach Anspruch 2, **dadurch gekennzeichnet, dass** die Verteilungsmittel mindestens ein Elektroventil (24; 25) aufweisen.

4. Kaffeemaschine nach Anspruch 3, **dadurch gekennzeichnet, dass** jeder Brühkopf (9; 10) mit dem Ausgang des Heizkessels über ein Zweiweg-Elektroventil (24; 25) verbunden ist.

5. Kaffeemaschine nach Anspruch 4, **dadurch gekennzeichnet, dass** das Elektroventil (24; 25) direktwirkend und in Ruhestellung geschlossen ist.

6. Kaffeemaschine nach einem der Ansprüche 4 oder 5, **dadurch gekennzeichnet, dass** die Kontrollmittel (27) den Betrieb der beiden Elektroventile (24; 25) entsprechend alternierenden Zyklen des Schließens und des Öffnens mit einem Zeitintervall zum gleichzeitigen Blockieren der beiden Elektroventile steuern.

7. Kaffeemaschine nach einem der vorhergehenden Ansprüche, **dadurch gekennzeichnet, dass** sie Mittel zum Erzeugen von Dampf aufweist, welcher in mindestens einen der Brühköpfe (9; 10) gefördert wird.

8. Kaffeemaschine nach einem der vorhergehenden Ansprüche, **dadurch gekennzeichnet, dass** sie eine Pumpe (19) aufweist, die mit Niederdruck arbeitet, um Wasser durch weiche Pads zu fördern, die in den Brühköpfen (9; 10) angeordnet sind.
